Europäisches Patentamt

European Patent Office

Office européen des brevets

(19)

(11) **EP 0 609 751 B1**

(12) **EUROPÄISCHE PATENTSCHRIFT**

(45) Veröffentlichungstag und Bekanntmachung des Hinweises auf die Patenterteilung:
**15.04.1998 Patentblatt 1998/16**

(51) Int. Cl.$^6$: **B01J 23/94**, B01J 23/92, B01J 38/68, B01J 23/88

(21) Anmeldenummer: **94101022.5**

(22) Anmeldetag: **25.01.1994**

(54) **Verfahren zur Regenerierung von im Rahmen katalytischer Gasphasenoxidationen niederer organischer Verbindungen verbrauchten Multimetalloxid-Oxidationskatalysatoren**

Regeneration process of a used oxydation catalyst based on a metal oxydes mixture in connection with the catalytic oxydation in the gas phase of low organic compounds

Procédé de régénération d'un catalyseur d'oxydation usagé constitue d'un mélange d'oxydes dans le cadre de l'oxydation catalytique en phase gazeuse de composés organiques inférieurs

(84) Benannte Vertragsstaaten:
**BE DE ES FR GB IT NL**

(30) Priorität: **03.02.1993 DE 4302992**

(43) Veröffentlichungstag der Anmeldung:
**10.08.1994 Patentblatt 1994/32**

(73) Patentinhaber:
**BASF Aktiengesellschaft
67063 Ludwigshafen (DE)**

(72) Erfinder:
• **Tenten, Andreas, Dr.
D-67434 Neustadt (DE)**
• **Hammon, Ulrich, Dr.
D-68165 Mannheim (DE)**
• **Weidlich, Peter, Dr.
D-68159 Mannheim (DE)**
• **Doerflinger, Walter
D-76684 Oestringen (DE)**

(56) Entgegenhaltungen:
**EP-A- 0 017 000          EP-A- 0 311 334
US-A- 4 425 255**

**Beschreibung**

Die vorliegende Erfindung betrifft ein Verfahren zur Regenerierung von im Rahmen katalytischer Gasphasenoxidationen niederer organischer Verbindungen verbrauchten Multimetalloxid-Oxidationskatalysatoren, die, unverbraucht, als Grundbestandteile die Elemente Mo, W, V und Cu in oxidischer Form enthalten, durch Einwirkung oxidierend wirkender Mittel und lösend wirkendem, Essigsäure und/oder deren Ammoniumsalz zugesetzt enthaltendem, wäßrigem Ammoniak sowie anschließendem Trocknen und Calcinieren.

Multimetalloxid-Oxidationskatalysatoren die, unverbraucht, als Grundbestandteile die Elemente Mo, W, V, und Cu in oxidischer Form enthalten und zur katalytischen Gasphasenoxidation niederer organischer Verbindungen wie 3 bis 6 C-Atome aufweisender Alkane, Alkanole, Alkanale, Alkene und Alkenale zu olefinisch ungesättigten Aldehyden und/oder Carbonsäuren, oder den entsprechenden Nitrilen (Ammonoxidation) verwendet werden, sind allgemein bekannt (vgl. z.B. EP-A 427 508, DE-A 29 09 671, DE-C 31 51 805, EP-A 235 760 oder DE-AS 26 26 887). Mit besonderem Vorteil werden sie bei der katalytischen Gasphasenoxidation des Acroleins zur Acrylsäure eingesetzt.

Typisch für diese katalytischen Gasphasenoxidationen ist, daß es sich in allen Fällen um exotherme Festbettoxidationen handelt, die bei erhöhten Temperaturen (einige 100°C) durchgeführt werden. Im Falle der Oxidation des Acroleins zur Acrylsäure liegen die Reaktionstemperaturen in der Regel im Bereich von 200 bis 400°C.

Die Herstellung dieser Multimetalloxid-Oxidationskatalysatoren erfolgt normalerweise so, daß man aus geeigneten Ausgangsverbindungen, die die elementaren Katalysatorkonstituenten als Bestandteil enthalten, ein möglichst inniges Trockengemisch herstellt und dieses bei Temperaturen von 200 bis 500°C, vorzugsweise 300 bis 400°C, calciniert.

Wesentlich ist nur, daß es sich bei den eingesetzten Ausgangsverbindungen entweder bereits um Oxide handelt, oder um solche Verbindungen, die durch Erhitzen, gegebenenfalls in Anwesenheit von Sauerstoff, in Oxide überführbar sind. Neben den Metalloxiden kommen daher als Ausgangsverbindungen vor allem Halogenide, Nitrate, Formiate, Acetate, Carbonate oder Hydroxide in Betracht. Geeignete Ausgangsverbindungen des Mo, W und V sind auch deren Oxoverbindungen (Molybdate, Wolframate und Vanadate) bzw. die von diesen abgeleiteten Säuren.

Das innige Vermischen der Ausgangsverbindungen kann in trockener bder in nasser Form erfolgen. Erfolgt es in trockener Form, werden die Ausgangsverbindungen zweckmäßigerweise als feinteilige Pulver eingesetzt und nach dem Mischen z.B. zu Katalysatorkörpern gewünschter Geometrie verpreßt (z.B. tablettiert), die dann der Calcinierung unterworfen werden.

Vorzugsweise erfolgt das innige Vermischen jedoch in nasser Form. Üblicherweise werden die Ausgangsverbindungen dabei in Form einer wäßrigen Lösung oder Suspension miteinander vermischt. Anschließend wird die wäßrige Masse getrocknet und nach Trocknung calciniert. Vorzugsweise erfolgt der Trocknungsprozeß unmittelbar im Anschluß an die Fertigstellung der wäßrigen Mischung und durch Sprühtrocknung (die Ausgangstemperaturen betragen in der Regel 100 bis 150°C). Das dabei anfallende Pulver kann unmittelbar durch Pressen geformt werden. Häufig erweist es sich jedoch für eine unmittelbare Weiterverarbeitung als zu feinteilig, weshalb es unter Zusatz von Wasser zweckmäßigerweise zunächst geknetet wird.

Die anfallende Knetmasse wird anschließend entweder zur gewünschten Katalysatorgeometrie geformt, getrocknet und dann der Calcinierung unterworfen (führt zu sogenannten Vollkatalysatoren) oder ungeformt calciniert und danach zu einem feinteiligen (üblicherweise < 80 μm) Pulver vermahlen, welches normalerweise unter Zusatz einer geringen Menge Wasser sowie gegebenenfalls weiterer üblicher Bindemittel als Feuchtmasse auf inerte Trägerkörper aufgetragen wird. Nach beendeter Beschichtung wird nochmals getrocknet und so der einsatzfähige Schalenkatalysator erhalten. Prinzipiell kann das calcinierte Pulver aber auch als Pulverkatalysator eingesetzt werden. Erfolgt das Vermischen der Ausgangsverbindungen in Form einer wäßrigen Lösung, so können mit selbiger auch inerte poröse Trägerkörper getränkt, getrocknet und abschließend zu Trägerkatalysatoren calciniert werden.

Bei der Herstellung von Schalenkatalysatoren kann das Beschichten der Trägerkörper auch vor der Calcinierung, d.h. z.B. mit dem befeuchteten Sprühpulver, erfolgen. Für Schalenkatalysatoren geeignete Trägermaterialien sind z.B. poröse oder unporöse Aluminiumoxide, Siliciumdioxid, Thoriumdioxid, Zirkondioxid, Siliciumcarbid oder Silicate wie Magnesium- oder Aluminiumsilicat. Die Trägerkörper können regelmäßig oder unregelmäßig geformt sein, wobei regelmäßig geformte Trägerkörper mit deutlich ausgebildeter Oberflächenrauhigkeit, z.B. Kugeln oder Hohlzylinder, bevorzugt werden. Unter diesen sind wiederum Kugeln von Vorteil.

Ganz besonders vorteilhaft ist die Verwendung von im wesentlichen unporösen, oberflächenrauhen, kugelförmigen Trägern aus Steatit, deren Durchmesser 1 bis 6 mm, bevorzugt 4 bis 5 mm beträgt. Die Schichtdicke der Aktivmasse wird zweckmäßigerweise als im Bereich 50 bis 500 μm, bevorzugt im Bereich 150 bis 250 μm liegend gewählt.

Die Calcinierung der die Ausgangsverbindungen in inniger Mischung enthaltenden Trockenmasse erfolgt mit Vorteil in einem mit Luft beschickten Drehrohrofen.

Der im Rahmen der Gasphasenoxidationen benötigte Sauerstoff kann z.B. in Form von Luft, aber auch in reiner Form zugesetzt werden. Aufgrund der hohen Reaktionswärme werden die Reaktionspartner vorzugsweise mit Inertgas wie $N_2$, rückgeführten Reaktionsabgasen und/oder Wasserdampf verdünnt. Bei der Acroleinoxidation wird üblicherweise bei einem Acrolein:Sauerstoff:Wasserdampf:Inertgas-Volumenverhältnis von 1:(1 bis 3):(0 bis 20):(3 bis 30), vorzugsweise von 1:(1 bis 3):(0,5 bis 10):(7 bis 18) gearbeitet. Normalerweise wird bei dem Verfahren Acrolein eingesetzt, das durch katalytische Gasphasenoxidation von Propen erzeugt wurde. In der Regel werden die Acrolein enthaltenden Reaktionsgase dieser Propenoxidation ohne Zwischenreinigung eingesetzt. Der Reaktionsdruck beträgt in der Regel 1 bis 3 bar und die Gesamtraumbelastung beträgt vorzugsweise 1.000 bis 3.500 Nl/l/h. Typische Vielrohr-Festbettreaktoren sind z.B. in den Schriften DE-A 28 30 765, DE-A 22 01 528 oder US-A 3 147 084 beschrieben.

Es ist bekannt, daß Multimetalloxidmassen der beschriebenen Art unter den genannten Randbedingungen für den genannten Anwendungszweck zwar of mehrere Jahre eingesetzt werden können, sie schließlich jedoch nach und nach aufgrund von Schädigungen an Wirksamkeit einbüßen. Aufgrund der hohen Einsatzmengen und den mit diesen verbundenen Metallrohstoffkosten besteht erhebliches Interesse an einer regenerierenden Aufarbeitung der verbrauchten Multimetalloxid-Oxidationskatalysatoren. Aus der DE-C 31 51 805 ist bekannt, im Rahmen katalytischer Gasphasenoxidationen niederer organischer Verbindungen verbrauchte Multimetalloxid-Oxidationskatalysatoren, die, unverbraucht, als Grundbestandteile die Elemente Mo, W, V und Cu in oxidischer Form enthalten, durch Einwirkung von oxidierend wirkendem Wasserstoffperoxid und lösend wirkendem, Essigsäure und/oder deren Ammoniumsalz zugesetzt enthaltendem, wäßrigem Ammoniak sowie anschließendem Trocknen und Calcinieren zu regenerieren.

Die Aktivität der so regenerierten Multimetalloxid-Oxidationskatalysatoren vermag jedoch nicht voll zu befriedigen.

Aufgabe der vorliegenden Erfindung war daher, für von im Rahmen katalytischer Gasphasenoxidationen niederer organischer Verbindungen (insbesondere von Acrolein zu Acrylsäure) verbrauchten Multimetalloxid-Oxidationskatalysatoren, die, unverbraucht, als Grundbestandteile die Elemente Mo, W, V und Cu in oxidischer Form enthalten, ein verbessertes Verfahren zur Regenerierung zur Verfügung zu stellen.

Demgemäß wurde ein Verfahren zur Regenerierung von im Rahmen katalytischer Gasphasenoxidation gefunden, wie es Gegenstand des Patentanspruchs ist.

Als oxidierend wirkendes Mittel kann auf die verbrauchten Multimetalloxid-Oxidationskatalysatoren z.B. ein einfacher Röstprozeß angewendet werden. D.h. die verbrauchten Multimetalloxid-Oxidationskatalysatoren werden in Gegenwart von Sauerstoff, z.B. in Form von Luft, einige Stunden auf Temperaturen von 400 bis 650°C erhitzt. Der Prozeß kann in der Regel beendet werden, wenn keine von den Katalysatorkörpern ausgehende Gasentwicklung mehr feststellbar ist. Durch diese oxidative Behandlung, die in einfacher Weise in einem mit Luft beschickten Umluftofen erfolgen kann, werden vermutlich Ansammlungen Kohlenstoff enthaltender Verbindungen auf der Oberfläche der Multimetalloxid-Oxidationskatalysatoren beseitigt und in reduzierter Form vorliegende metallische Konstituenten wieder in einen oxidierten Zustand überführt.

Die so gerösteten verbrauchten Mischoxide können nun mit einer wäßrigen Ammoniaklösung behandelt werden. Zweckmäßigerweise liegt die Konzentration des Ammoniak im Bereich von 5 bis 25 Gew.-%. Diese Behandlung bewirkt, daß die sauren Oxide in Lösung gehen, wodurch das gesamte Mischoxid in eine wäßrige Lösung oder wäßrige Suspension überführt wird. Sie kann in einem weiten Temperaturbereich durchgeführt werden. Im allgemeinen arbeitet man bei Temperaturen von 10 bis 100, vorzugsweise von 60 bis 90 und besonders bevorzugt von 70 bis 80°C. Sie sollte so lange durchgeführt werden, bis sich der pH-Wert der Lösung nicht mehr ändert und dies auch nach Zusatz weiterer frischer wäßriger $NH_3$-Lösung der Fall ist. Andernfalls sind die löslichen katalytisch aktiven Metalloxidkomponenten noch nicht vollständig in Lösung gegangen, was die Regenerierung mindert. Die Lösebehandlung kann z.B. so durchgeführt werden, daß die verbrauchten Katalysatoren auf Filtern mit der wäßrigen Ammoniaklösung extrahiert werden. Man kann die verbrauchten Katalysatoren aber auch in einem Rührgefäß mit der wäßrigen Ammoniaklösung, gegebenenfalls mehrfach mit frischer wäßriger Ammoniaklösung, behandeln. Eine mehrmalige Behandlung mit der wäßrigen Ammoniaklösung empfiehlt sich vor allem dann, wenn die aktiven Katalysatorbestandteile fest auf Trägerstoffen haften oder in Poren von Trägerstoffen festgehalten werden, wie dies bei Schalenkatalysatoren oder durch Imprägnierung hergestellten Trägerkatalysatoren der Fall sein kann. Die bei der Behandlung sich bildende Lösung bzw. Suspension wird im Fall von Träger enthaltenden Katalysatoren von diesen vorzugsweise durch z.B. Dekantieren oder Filtrieren abgetrennt.

Die Lösebehandlung kann aber auch ohne vorher angewendeten Röstprozeß erfolgen. In diesem Fall wird der wäßrigen Ammoniaklösung als oxidierend wirkendes Mittel in vorteilhafter Weise Wasserstoffperoxid zugesetzt. Typisch sind $H_2O_2$-Gehalte von 0,01 bis 0,5 g, insbesondere 0,02 bis 0,2 g je g Mischoxid (überhöhte $H_2O_2$-Mengen erweisen sich als nicht besonders kritisch, sind jedoch nicht zweckmäßig). Die Ammoniakmenge liegt typisch oberhalb von 0,1 ,vorzugsweise oberhalb von 1 g je g Mischoxid. Gewünschtenfalls kann auch ein Röstprozeß mit einer solchen $H_2O_2$-Behandlung kombiniert angewendet werden.

Analysiert man das resultierende wäßrige Gemisch z.B. mittels Atomabsorptionsspektroskopie (AAS), so stellt man überraschender Weise fest, daß sich im Rahmen der katalytischen Festbettoxidation (vor allem von Acrolein zu Acrylsäure) offensichtlich inbesondere Mo und V in erheblichem Ausmaß verflüchtigen (verloren gehen, ausgetragen werden). Die analytisch bezüglich verschiedener Katalysatorkonstituenten festgestellten Defizite werden durch Zusatz geeigneter Ausgangsverbindungen, die diese Konstituenten enthalten, beseitigt. Zweckmäßigerweise, aber nicht notwendigerweise, werden dazu dieselben Ausgangsverbindungen eingesetzt, wie für die Neuherstellung der Multimetalloxid-Oxidationskatalysatoren. Bevor nun aus dem wäßrigen Gemisch in an sich bekannter Weise (vorzugsweise durch Sprühtrocknung) ein die elementaren Katalysatorkonstituenten in inniger Mischung enthaltendes Trockengemisch erzeugt wird, werden bezogen auf 3 g im wäßrigen Gemisch enthaltener Aktivmasse 0,1 bis 1 g Ammoniumacetat bzw. zu dessen Bildung befähigte Essigsäure zugesetzt (ein Zusatz von darüber hinausgehenden Mengen an Ammoniumacetat erweist sich im wesentlichen als nicht kritisch, ist jedoch nicht zweckmäßig).

Selbstverständlich kann der Zusatz der Essigsäure bzw. des Ammoniumacetats auch bereits vorab der Lösebehandlung zugesetzt werden. Aus der resultierenden wäßrigen Lösung bzw. Suspension bzw. dem daraus zu erzeugenden Trockengemisch können nun in von der Neuherstellung der Multimetalloxid-Oxidationskatalysatoren bekannter Weise je nach Bedarf Träger-, Voll- oder Schalenkatalysatoren erzeugt und zum Zwecke der katalytischen Gasphasenoxidation niederer organischer Verbindungen verwendet werden.

Das erfindungsgemäße Verfahren eignet sich insbesondere zur Regenerierung von verbrauchten Multimetalloxid-Oxidationskatalysatoren, die, neu hergestellt, der allgemeinen Summenformel I

$$Mo_{12}V_aW_bCu_cNi_dX^1_e X^2_f X^3_g X^4_h X^5_i O_n \tag{I},$$

in der die Variablen folgende Bedeutung haben:

| | |
|---|---|
| $X^1$ | ein oder mehrere Alkalimetalle, |
| $X^2$ | ein oder mehrere Erdalkalimetalle, |
| $X^3$ | Chrom, Mangan, Cer und/oder Niob, |
| $X^4$ | Antimon und/oder Wismut, |
| $X^5$ | Silicium, Aluminium, Titan und/oder Zirkonium, |
| a | 1 bis 6, |
| b | 0,2 bis 4, |
| c | 0,5 bis 6, |
| d | 0 bis 6, |
| e | 0 bis 2, |
| f | 0 bis 3, |
| g | 0 bis 5, |
| h | 0 bis 40, |
| i | 0 bis 40 und |
| n | eine Zahl, die durch die Wertigkeit und Häufigkeit der von Sauerstoff verschiedenen Elemente in I bestimmt wird, |

entsprechen. Im Fall von Vollkatalysatoren ist i vorzugsweise 15 bis 40. Als ganz besonders günstig erweist sich das erfindungsgemäße Verfahren bei Massen I, für die e, f, g, h und i 0 sind und die in Form von Schalenkatalysatoren zur Anwendung gelangen.

Beispiele

a) Neuherstellung eines Multimetalloxid-Oxidationskatalysators a : $Mo_{12}V_3W_{1,2}Cu_{2,4}O_x$

190 g Kupfer(II)acetatmonohydrat wurden in 2.700 g Wasser Zu einer Lösung I gelöst. In 5.500 g Wasser wurden bei 95°C nacheinander 860 g Ammoniumheptamolybdattetrahydrat, 143 g Ammoniummetavanadat und 126 g Ammoniumparawolframatheptahydrat zu einer Lösung II gelöst. Anschließend wurde die Lösung I auf einmal in die Lösung II eingerührt und das wäßrige Gemisch bei einer Austrittstemperatur von 110°C sprühgetrocknet. Danach wurde das Sprühpulver je kg Pulver mit 0,15 kg Wasser verknetet. Die Knetmasse wurde in einem mit Luft beschickten Drehrohrofen innerhalb von 3 h auf 400°C aufgeheizt und anschließend 5 h bei 400°C calciniert. Das calcinierte, katalytisch aktive Material wurde auf Teilchendurchmesser von 0,1 bis 50 µm gemahlen. Mit dem so erhaltenen Aktivmassenpulver wurden in einer Drehtrommel unporöse oberflächenrauhe Steatitkugeln eines Durchmessers von 4 bis 5 mm in einer Menge von 50 g Pulver je 200 g Steatitkugeln bei gleichzeitigem Zuatz von 18 g Wasser beschichtet. Anschließend wurde mit 110°C heißer Luft getrocknet.

Der so erhaltene Schalenkatalysator wurde mit Inertmaterial verdünnt unter folgenden Reaktionsbedingungen in einem Rohrbündelreaktor zur katalytischen Gasphasenoxidation von Acrolein zu Acrylsäure eingesetzt:

Zusammensetzung des Reaktionsgases:

5 Vol.-% Acrolein, 7 Vol.-% $O_2$, 10 Vol.-% $H_2O$, Restmenge $N_2$;
Raumbelastung: 2.300 Nl/l/h.

Die Temperatur des zur Temperierung verwendeten Salzbades wurde so gewählt, daß bei einfachem Durchgang eine Acroleinumwandlung von ca. 99 mol-% resultierte.

Tabelle 1 zeigt die erforderliche Salzbadtemperatur (Maß für die Aktivität; je höher die erforderliche Salzbadtemperatur ist, desto niedriger ist die Katalysatoraktivität) sowie die Selektivität der Acrylsäurebildung nach 4 Wochen Betriebsdauer (a1) und nach drei Jahren Betriebsdauer (a2).

b) Erfindungsgemäße Regenerierung des 3 Jahre unter den Reaktionsbedingungen aus a) gebrauchten Multimetalloxid-Oxidationskatalysators a

Zunächst wurden die Schalenkatalysatoren in einem mit Luft beschichteten Umluftofen während 2,5 h auf 550°C erhitzt. 900 g des gerösteten Schalenkatalysators wurden in einen Waschturm gefüllt und zyklisch mit einer auf 80°C erhitzten Lösung von 58 g $NH_3$, 1.700 g Wasser und 24 g 30 gew.-%iger Wasserstoffperoxidlösung während 2 h behandelt. Nach dieser Zeit war die gesamte Aktivmasse in Lösung gegangen, die nach dem Abkühlen von den Trägerkugeln abgetrennt wurde. Anschließend wurden die Trägerkugeln mit 200 g 75°C warmem Wasser nachgewaschen. Sodann wurden die beiden wäßrigen Phasen vereinigt und mittels AAS quantitativ analysiert. Infolge Mo- und V-Schwund hatte sich die Aktivmassenstöchiometrie wie folgt verändert: $Mo_{7,5}V_{2,6}W_{1,2}Cu_{2,4}O_x$.

Zur Wiederherstellung der ursprünglichen Stöchiometrie wurden folgende Lösungen hergestellt und den vereinigten Phasen zugesetzt:

- 80°C warme Lösung von 54,8 g Ammoniumheptamolybdattetrahydrat und 70 g 25 gew.-%iger wäßriger $NH_3$-Lösung in 110 g Wasser;
- 80°C warme Lösung von 3,2 g Ammoniummetavanadat und 6,5 g 25 gew.-%iger wäßriger $NH_3$-Lösung in 65 g Wasser.

Den vereinigten Lösungen wurden 10 g 100 %ige Essigsäure zugesetzt und das Gemisch bei einer Austrittstemperatur von 110°C sprühgetrocknet. Das Sprühpulver wurde in völliger Entsprechung zur Neuherstellung unter a) zu einem regenerierten Schalenkatalysator verarbeitet (die abgetrennten Steatitträgerkugeln wurden diesbezüglich wiederverwendet) und wie unter a) zur Oxidation von Acrolein eingesetzt. Die Ergebnisse nach vierwöchiger Betriebsdauer zeigt ebenfalls Tabelle 1 (a3).

c) Regenerierung des 3 Jahre unter den Reaktionsbedingungen aus a) gebrauchten Multimetalloxid-Oxidationskatalysators a ohne Ausgleich des Mo,V-Verlustes

Die Regenerierung erfolgte wie unter b), das festgestellt Mo,V-Defizit wurde jedoch belassen. Die Ergebnisse nach vierwöchiger Betriebsdauer mit den so regenerierten Schalenkatalysatoren zeigt ebenfalls Tabelle 1 (a4).

Tabelle 1

| Schalenkatalysator | Acroleinumwandlung [mol-%] | Salzbadtemperatur [°C] | Selektivität [mol-%] |
|---|---|---|---|
| a1 | 99 | 265 | 95 |
| a2 | 99 | 290 | 93,5 |
| a3 | 99 | 263 | 95 |
| a4 | 99 | 287 | 93,5 |

d) Neuherstellung eines Multimetalloxid-Oxidationskatalysators b : $Mo_{12}V_3W_{1,2}Cu_{1,6}Ni_{0,8}O_x$

Die Neuherstellung des Multimetalloxid-Oxidationskatalysators b erfolgt wie in a), es wurde lediglich die anteilsmäßige Menge an Kupfer(II)acetatmonohydrat durch Nickel(II)acetattetrahydrat ersetzt.

Der Einsatz zur Oxidation von Acrolein erfolgte gleichfalls wie unter a). Die Ergebnisse nach vierwöchiger (b1) und dreijähriger (b2) Betriebsdauer zeigt Tabelle 2.

e) Erfindungsgemäße Regenerierung des 3 Jahre unter den Reaktionsbedingungen aus a) gebrauchten Multimetalloxid-Oxidationskatalysators b

Zunächst wurde wie in b) geröstet. 900 g des gerösteten Schalenkatalysators wurden in einen Waschturm gefüllt und zyklisch mit einer auf 70°C erhitzten Lösung von 55 g $NH_3$ in 1.800 g Wasser während 3 h behandelt. Nach dieser Zeit war die gesamte Aktivmasse in Lösung gegangen, die nach dem Abkühlen von den Trägerkugeln abgetrennt wurde. Anschließend wurden die Trägerkugeln mit 200 g 75°C warmem Wasser nachgewaschen. Sodann wurden die beiden wäßrigen Phasen vereinigt und mittels AAS quantitativ analysiert. Infolge Mo- und V-Schwund hatte sich die Aktivmassenstöchiometrie wie folgt verändert: $Mo_{8,4}V_{2,7}W_{1,2}Cu_{1,6}Ni_{0,8}O_x$.

Zur Wiederherstellung der ursprünglichen Stöchiometrie wurden folgende Lösungen hergestellt und den vereinigten Phasen zugesetzt:

- 80°C warme Lösung von 43,8 g Ammoniumheptamolybdattetrahydrat und 57 g 25 gew.-%iger wäßriger NH₃-Lösung in 90 g Wasser;
- 80°C warme Lösung von Ammoniummetavanadat und 4,5 g 25 gew.-%iger wäßriger NH₃-Lösung in 45 g Wasser.

Den vereinigten Lösungen wurden 30 g 100 %iger Essigsäure zugesetzt und das Gemisch bei einer Austrittstemperatur von 110°C sprühgetrocknet. Das Sprühpulver wurde in völliger Entsprechung zur Neuherstellung unter a) zu einem regenerierten Schalenkatalysator verarbeitet und wie unter a) zur Oxidation von Acrolein eingesetzt. Die Ergebnisse nach vierwöchiger Betriebsdauer zeigt ebenfalls Tabelle 2 (b3).

Tabelle 2

| Schalenkatalysator | Acroleinumwandlung [mol-%] | Salzbadtemperatur [°C] | Selektivität [mol-%] |
|---|---|---|---|
| b1 | 98 | 262 | 95 |
| b2 | 98 | 280 | 94 |
| b3 | 98 | 258 | 95 |

**Patentansprüche**

1. Verfahren zur Regenerierung von im Rahmen der katalytischen Gasphasenoxidation von Acrolein zu Acrylsäure verbrauchten Multimetall-Oxidationskatalysatoren, die, unverbraucht, der allgemeinen Summenformel I

$$Mo_{12}V_aW_bCu_cNi_dX_e^1X_f^2X_g^3X_h^4X_i^5O_n \qquad (I),$$

in der Variablen folgende Bedeutung haben:

$X^1$ ein oder mehrere Alkalimetalle,
$X^2$ ein oder mehrere Erdalkalimetalle,
$X^3$ Chrom, Mangan, Cer und /oder Niob,
$X^4$ Antimon und/oder Wismut,
$X^5$ Silicium, Aluminium, Titan und/oder Zirkonium,
a 1 bis 6,
b 0,2 bis 4,
c 0,5 bis 6,
d 0 bis 6,
e 0 bis 2,
f 0 bis 3,
g 0 bis 5,
h 0 bis 40,
i 0 bis 40 und
n eine Zahl, die durch die Wertigkeit und Häufigkeit der von Sauerstoff verschiedenen Elemente in I bestimmt wird,

entsprechen, durch Einwirkung oxidierend wirkender Mittel und lösend wirkendem, Essigsäure und/oder deren Ammoniumsalz zugesetzt enthaltendem, wäßrigen Ammoniak sowie anschließendem Trocknen und Calcinieren, dadurch gekennzeichnet, daß innerhalb des Verfahrens der Gehalt der metallischen Bestandteile quantitativ ermittelt und auf den jeweiligen Ursprungswert ergänzt wird.

**Claims**

1. A process for regenerating spent multimetal oxidation catalysts from the catalytic gas-phase oxidation of acrolein to acrylic acid, which, in fresh form, conform to the empirical formula I

$$MO_{12}V_aW_bCu_cNi_dX_e^1X_f^2X_g^3X_h^4X_i^5O_n \qquad (I),$$

where

| | |
|---|---|
| $X^1$ | is one or more alkali metals, |
| $X^2$ | is one or more alkaline earth metals, |
| $X^3$ | is chromium, manganese, cerium and/or niobium, |
| $X^4$ | is antimony and/or bismuth, |
| $X^5$ | is silicon, aluminum, titanium and/or zirconium, |
| a | is from 1 to 6, |
| b | is from 0.2 to 4, |
| c | is from 0.5 to 6, |
| d | is from 0 to 6, |
| e | is from 0 to 2, |
| f | is from 0 to 3, |
| g | is from 0 to 5, |
| h | is from 0 to 40, |
| i | is from 0 to 40 and |
| n | is a number which is determined by the valency and frequency of the elements in I other than oxygen, |

by the action of oxidizing agents or means and solubilizing, aqueous ammonia to which acetic acid and/or the ammonium salt thereof has been added, with subsequent drying and calcination, which comprises quantitatively determining the content of metallic constituents during the process and making this content up to the respective original value.

**Revendications**

1. Procédé de régénération de catalyseurs d'oxydation multimétalliques, utilisés dans le cadre de l'oxydation en phase gaz de l'acroléine en acide acrylique, représentés à l'état non usagé par la formule générale I

$$Mo_{12}V_aW_bCu_cNi_dX_e^1 X_f^2 X_g^3 X_h^4 X_i^5 O_n \qquad (I),$$

dans laquelle les variables prennent les significations suivantes :

| | |
|---|---|
| $X^1$ | un ou plusieurs métaux alcalins, |
| $X^2$ | un ou plusieurs métaux alcalino-terreux, |
| $X^3$ | chrome, manganèse, cérium et/ou niobium, |
| $X^4$ | antimoine et/ou bismuth, |
| $X^5$ | silicium, aluminium, titane et/ou zirconium, |
| a | 1 à 6, |
| b | 0,2 à 4, |
| c | 0,5 à 6, |
| d | 0 à 6, |
| e | 0 à 2, |
| f | 0 à 3, |
| g | 0 à 5, |
| h | 0 à 40, |
| i | 0 à 40 et |
| n | un nombre déterminé à partir de la valence et de la fréquence des éléments de I autres que l'oxygène, |

par l'action d'un milieu oxydant et par l'action dissolvante d'ammoniac aqueux contenant de l'acide acétique et/ou son sel d'ammonium, suivies d'un séchage et d'une calcination, caractérisé en ce que les teneurs en composants métalliques sont déterminées de façon quantitative au cours du procédé et ramenées à leurs valeurs d'origine respectives.